# EUROPEAN PATENT SPECIFICATION

(11) **EP 3 305 546 B1**
(45) Date of publication and mention of the grant of the patent: **07.08.2019**
(21) Application number: 16802826.4
(22) Date of filing: 02.06.2016
(51) Int. Cl.: B60C 1/00, B60C 15/06, C08K 3/36, C08L 7/00

(54) **TIRE**
REIFEN
PNEU

(30) Priority: 03.06.2015 JP 2015113309
(43) Date of publication of application: 11.04.2018
(73) Proprietor: Bridgestone Corporation, Tokyo 104-8340 (JP)
(72) Inventor: SAKURAI, Hideyuki, Tokyo 104-8340 (JP)
(74) Representative: Oxley, Robin John George
(86) International application number: PCT/JP2016/002689
(87) International publication number: WO 2016/194386

(56) References cited:
- EP-A1- 1 197 518
- EP-A1- 2 377 693
- WO-A1-2010/074286
- JP-A- 2009 242 576
- JP-A- 2011 084 222
- JP-A- 2011 105 789
- JP-A- 2012 007 145
- JP-A- 2012 011 897

## Description

### TECHNICAL FIELD

This disclosure relates to a tire.

### BACKGROUND

Many attempts are being made to reduce the rolling resistance of a tire for better fuel efficiency.

Various techniques for reducing the rolling resistance of a tire have been disclosed, such as optimizing the components of the rubber composition constituting the tread rubber as disclosed in Patent Literature (PTL) 1 or optimizing the tread pattern as disclosed in PTL 2.

The aforementioned rolling resistance is also known to change greatly depending on temperature. This leads to problems such as not being able to reduce the rolling resistance at low temperatures even when the rolling resistance at high temperatures is effectively reduced. Techniques for reducing the rolling resistance in all temperature regions are thus desired.

Furthermore, the difference in rolling resistance between low temperatures and high temperatures is preferably small in order to achieve stable fuel efficiency.

### CITATION LIST

### Patent Literature

PTL 1: JP H7-164821 A
PTL 2: JP 2002-097309 A

### SUMMARY

### (Technical Problem)

Therefore, it would be helpful to provide a tire in which the rolling resistance is reduced at both low temperatures and at high temperatures and in which the rolling resistance exhibits a small difference between low temperatures and high temperatures.

### (Solution to Problem)

We conducted thorough research to achieve this purpose.

We discovered that the rolling resistance can be reduced at both low temperatures and high temperatures and that the difference in the rolling resistance depending on temperature can be reduced by i) using, in the rubber constituting the tread portion, a rubber composition having compounded therein a rubber component containing a large amount of natural rubber that is highly compatible with a thermoplastic resin and having compounded therein a particular type of thermoplastic resin that contributes to increasing the flexibility of the tire, and ii) setting the dynamic storage modulus (E') measured at 1% strain to a low value for the bead fillers disposed on the radial outside of the bead cores.

A tire of this disclosure includes a tread portion; and a pair of bead portions comprising a bead core and a bead filler disposed on a radial outside of the bead core, wherein tread rubber forming the tread portion comprises a rubber composition including a rubber component (A) including 50 mass% or more of natural rubber, at least one kind of thermoplastic resin (B) selected from the group consisting of C₅-based resins, C₅- to C₉-based resins, C₉-based resins, terpene-based resins, terpene-aromatic compound-based resins, rosin-based resins, dicyclopentadiene resins, and alkylphenol-based resins, 5 parts by mass to 50 parts by mass per 100 parts by mass of the rubber component (A) of the at least one kind of thermoplastic resin (B) being included, and a filler (C) including silica, 20 parts by mass to 120 parts by mass per 100 parts by mass of the rubber component (A) of the filler (C) being included, and a dynamic storage modulus (E') of the bead filler measured at 1% strain at 25°C is 50 MPa or lower.

With this configuration, the rolling resistance of a tire can be reduced at both low temperatures and high temperatures, and the difference in the rolling resistance between low temperatures and high temperatures can be reduced.

In the tire of this disclosure, the content of the silica in the filler (C) is preferably 50 mass% to 100 mass% and more preferably 90 mass% or higher.

The reason is that this configuration achieves a greater effect of reducing the rolling resistance.

In the tire of this disclosure, 10 mass% to 50 mass% of styrene-butadiene copolymer rubber is preferably included in the rubber component (A).

The reason is that this configuration improves the braking performance and steering stability on dry road surfaces.

Furthermore, in the tire of this disclosure, the 50% modulus of the tread rubber is preferably 1.0 MPa or lower, and the ratio of the dynamic storage modulus (E') of the bead filler, measured at 1% strain at 25°C, to the 50% modulus of the tread rubber is more preferably 0.02 to 0.1.

The reason is that this configuration can achieve an even better effect of reducing the rolling resistance.

### (Advantageous Effect)

According to this disclosure, a tire in which the rolling resistance is reduced at both low temperatures and at high temperatures and in which the rolling resistance exhibits a small difference between low temperatures and high temperatures can be provided.

### BRIEF DESCRIPTION OF THE DRAWINGS

In the accompanying drawings:

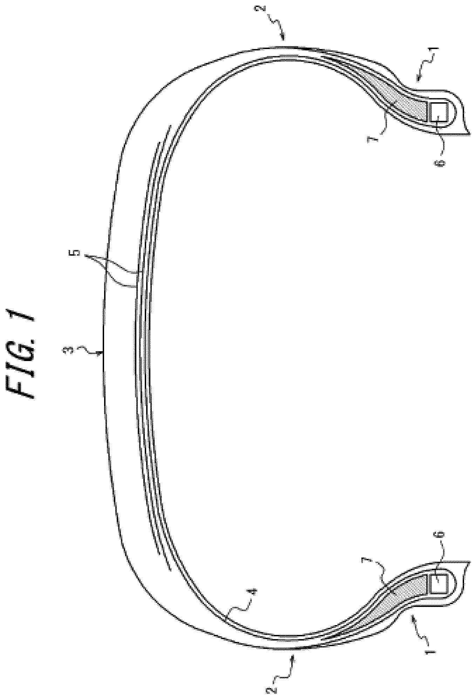

FIG. 1 is a cross-sectional diagram in the width direction illustrating a tire according to one Embodiment.

### DETAILED DESCRIPTION

With reference to the drawings, one embodiment of a tire of this disclosure tire will be described below in detail with examples.

As illustrated in FIG. 1, a tire of this disclosure includes a tread portion 3 and a pair of bead portions 1 each including a bead core 6 and a bead filler 7 disposed on the radial outside of the bead core 6.

While not limited in this way, the tire of this disclosure may include the following in addition to the tread portion 3 and the pair of bead portions 1, as illustrated in FIG. 1: a pair of sidewall portions 2 continuing outward in the tire radial direction from the bead portions 1, a carcass 4 extending toroidally across each portion of the tire between the bead cores 6 embedded in the bead portions 1, and a belt composed of a plurality of belt layers 5 disposed outward in the tire radial direction from a crown portion of the carcass 4. The tire of this disclosure can be used as a typical radial tire or run flat tire.

### (Tread rubber)

The tread rubber constituting the tread portion of a tire of this disclosure includes a rubber component (A) including 50 mass% or more of natural rubber; at least one kind of thermoplastic resin (B) selected from the group consisting of C₅-based resins, C₅- to C₉-based resins, C₉-based resins, terpene-based resins, terpene-aromatic compound-based resins, rosin-based resins, dicyclopentadiene resins, and alkylphenol-based resins, 5 parts by mass to 50 parts by mass of the at least one kind of thermoplastic resin (B) being included per 100 parts by mass of the rubber component; and a filler (C) including silica, 20 parts by mass to 120 parts by mass of the filler (C) being included per 100 parts by mass of the rubber component.

The flexibility of the tire can be increased by i) using, in the rubber constituting the tread portion, a rubber composition including a rubber component containing a large amount of natural rubber that is highly compatible with a thermoplastic resin and including a particular type of thermoplastic resin that contributes to increasing the wet performance of the tire, and ii) setting the dynamic storage modulus (E') measured at 1% strain at 25°C to a low value for the bead fillers disposed on the radial outside of the bead cores. As a result, the rolling resistance can be reduced at both low temperatures and high temperatures, and the difference in the rolling resistance depending on temperature can be reduced.

### -Rubber component (A)

The content of the natural rubber (NR) in the rubber component (A) used in the rubber composition is 50 mass% or more, preferably 70 mass% or more, and more preferably 80 mass% or more. Setting the NR content in the rubber component (A) to 50 mass% or more makes it easier to sufficiently obtain the effect of compounding the below-described thermoplastic resin (B).

Styrene-butadiene copolymer rubber (SBR) is preferably included in the rubber component (A) at a content of 5 mass% to 50 mass%, more preferably 5 mass% to 30 mass%, and particularly preferably 10 mass% to 20 mass%. Compounding SBR in the rubber component increases the glass transition temperature (Tg) of the rubber composition, thereby improving the braking performance and steering stability on dry road surfaces. Such effects might be insufficient if the SBR content in the rubber component (A) falls below 5 mass%. If the SBR content in the rubber component (A) exceeds 50 mass%, the NR content in the rubber component (A) necessarily falls below 50 mass%, which not only reduces the aforementioned effect obtained by compounding NR but also leads to other problems such as a tendency for increased rolling resistance, because of greater heat generation in the rubber, and difficulty conforming to the road on slippery, wet road surfaces, because of reduced flexibility of the rubber.

Furthermore, as other rubber material, the rubber component (A) can include butadiene rubber, acrylonitrile-butadiene copolymer rubber, chloroprene rubber, polyisoprene rubber, and the like as appropriate.

### -Thermoplastic resin (B)

The rubber composition includes, per 100 parts by mass of the rubber component, 5 parts by mass to 50 parts by mass of at least one kind of thermoplastic resin (B) selected from the group consisting of C₅-based resins, C₅- to C₉-based resins, C₉-based resins, terpene-based resins, terpene-aromatic compound-based resins, rosin-based resins, dicyclopentadiene resins, and alkylphenol-based resins.

Including a specific amount of the thermoplastic resin (B) increases the glass transition temperature (Tg) of the rubber composition and causes the loss tangent (tanδ) to improve, thereby mainly allowing a reduction in the rolling resistance and a reduction in the difference in the rolling resistance depending on temperature and furthermore improving the performance of the tire on wet road surfaces (wet performance). The rubber component (A) in the rubber composition of this disclosure contains 50 mass% or more of NR as described above. Since the aforementioned thermoplastic resin (B) is highly compatible with NR, the aforementioned effects are particularly easy to obtain.

The "C₅-based resins" disclosed herein refer to C₅-based synthetic petroleum resins, such as a solid polymer obtained by polymerizing a C₅ fraction using a Friedel-Crafts catalyst such as AlCl₃ or BF₃. Specific examples include a copolymer including, as main components, isoprene, cyclopentadiene, 1,3-pentadiene, and 1-pentene; a copolymer of 2-pentene and dicyclopentadiene; and a polymer mainly composed of 1,3-pentadiene.

Using a C₅-based resin as the thermoplastic resin (B) also allows further improvement in the braking performance on icy and snowy road surfaces.

The "C₅- to C₉-based resins" disclosed herein refer to C₅- to C₉-based synthetic petroleum resins, such as a solid polymer obtained by polymerizing a C₅ to C₁₁ fraction using a Friedel-Crafts catalyst such as AlCl₃ or BF₃. Examples of the "C₅- to C₉-based resins" include a copolymer including, as main components, styrene, vinyltoluene, α-methylstyrene, indene, and the like. As the C₅- to C₉-based resins disclosed herein, a resin with little C₉ or higher component is preferable in terms of compatibility with the component (A). Here, including "little C₉ or higher component" means that the amount of C₉ or higher component in the total amount of the resin is less than 50 mass%, preferably 40 mass% or less.

Using a C₅- to C₉-based resin as the thermoplastic resin (B) can also further improve handling performance.

Here, C₅ to C₁₁ fractions used in the polymerization of the solid polymer as the "C₅- to C₉-based resins" include fractions other than the C₅ fraction and C₉ fraction.

In this disclosure, the "C₉-based resins" refer to C₉-based synthetic petroleum resins, such as a solid polymer obtained by polymerizing a C₉ fraction using a Friedel-Crafts catalyst such as AlCl₃ or BF₃. Examples of the "C₉-based resin" include a copolymer including indene, α-methylstyrene, vinyltoluene, and the like as main components.

Using a C₉-based resin as the thermoplastic resin (B) can also further improve handling performance.

The aforementioned terpene-based resin is a solid-state resin obtained by compounding turpentine, which is obtained simultaneously when obtaining rosin from pine trees, or a polymerizable component separated from the turpentine, and then polymerizing the turpentine or the polymerizable component using a Friedel-Crafts catalyst. Examples of the terpene-based resin include β-pinene resins and α-pinene resins. A typical example of the terpene-aromatic compound-based resin is a terpene-phenol resin. The terpene-phenol resin may be obtained by reacting terpenes and various phenols using a Friedel-Crafts catalyst or by further condensing the resultant with formalin. While terpenes used as raw material are not limited, a monoterpene hydrocarbon such as α-pinene or limonene is preferable, a terpene including α-pinene is more preferable, and α-pinene itself is particularly preferable. In this disclosure, terpene-phenol resins with a small ratio of the phenol component may suitably be used. Here, a "small ratio of the phenol component" refers to the amount of phenol component in the total amount of the resin being less than 50 mass%, preferably 40 mass% or less.

Using a terpene-aromatic compound-based resin as the thermoplastic resin (B), in particular using a terpene-phenol resin, can also further improve handling performance.

Examples of the aforementioned rosin-based resins include the following as a natural resin rosin: a gum rosin, a tall oil rosin, and a wood rosin, which are included in raw pine rosin or tall oil. Further examples include the following as a modified rosin, a rosin derivative, or a modified rosin derivative: a polymeric rosin and its partially hydrogenated rosin; a glycerin ester rosin and its partially hydrogenated rosin or completely hydrogenated rosin; a pentaerythritol ester rosin and its partially hydrogenated rosin or polymeric rosin; and the like.

Using a rosin-based resin as the thermoplastic resin (B) can also further improve handling performance.

The aforementioned dicyclopentadiene resin refers to, for example, resins obtained by polymerizing dicyclopentadiene using a Friedel-Crafts catalyst, such as AlCl₃ or BF₃, or the like. Specific examples of commercially-available dicyclopentadiene resins include Quinton 1920 (Nippon Zeon Co., Ltd.), Quinton 1105 (Nippon Zeon Co., Ltd.), and Marukarez M-890A (Maruzen Petrochemical Co., Ltd.).

Using a dicyclopentadiene resin as the thermoplastic resin (B) can also further improve braking performance on an icy and snowy road surface.

Examples of the aforementioned alkylphenol-based resin include an alkylphenol-acetylene resin such as a p-tert-butylphenol-acetylene resin, an alkylphenol-formaldehyde resin having a low degree of polymerization, and the like.

Using an alkylphenol-based resin as the thermoplastic resin (B) can also further improve handling performance.

The aforementioned thermoplastic resin (B) is compounded at 5 parts by mass to 50 parts by mass, preferably 10 parts by mass to 30 parts by mass, per 100 parts by mass of the rubber component (A). Setting the compounding amount of the thermoplastic resin (B) to 5 parts by mass to 50 parts by mass per 100 parts by mass of the rubber component (A) can guarantee the desired fracture resistance and wear resistance. If the compounding amount of the thermoplastic resin (B) falls below 5 parts by mass, it is difficult to achieve sufficient wet performance, whereas if the compounding amount exceeds 50 parts by mass, the desired wear resistance or fracture resistance may be difficult to achieve.

### -Filler (C)

The filler (C) containing silica is compounded into the rubber composition at 20 parts by mass to 120 parts by mass, preferably 50 parts by mass to 100 parts by mass, per 100 parts by mass of the rubber component (A).

The silica content in the filler (C) is preferably 50 mass% to 100 mass%, more preferably 80 mass% to 100 mass%, and particularly preferably 90 mass% to 100 mass%. In other words, 10 parts by mass to 120 parts by mass of silica per 100 parts by mass of the rubber component (A) are preferably included in the rubber composition of this disclosure, with 45 parts by mass to 100 parts by mass of silica being more preferable.

Setting the compounding amount of the filler (C) to 20 parts by mass to 120 parts by mass per 100 parts by mass of the rubber component (A) achieves a reinforcing effect, without impairing characteristics such as the flexibility of the rubber component (A). Furthermore, setting the compounding amount of silica in the filler (C) to be 50 mass% to 100 mass% in particular offers the advantage of effects such as reducing the rolling resistance at high temperatures and at low temperatures and improving the wet performance, while also tending not to impair the flexibility of the rubber component.

Compounding silica in the rubber composition achieves the effect of providing the rubber composition with a sufficient reinforcing property and a low heat generating property, without impairing the flexibility thereof, in a state where the NR and the thermoplastic resin (B) are favorably dispersed. Accordingly, the rubber composition of this disclosure is flexible enough to have a good property of conforming to a road surface with a low friction coefficient (for example, a slippery, wet road surface such as a manhole), thereby achieving sufficient braking performance on such a slippery, wet road surface.

Examples of the aforementioned silica include wet silica (hydrous silicate), dry silica (anhydrous silicate), calcium silicate, and aluminum silicate, with use of wet silica being particularly suitable. The BET specific surface area of the wet silica is preferably 40 m²/g to 350 m²/g, more preferably 150 m²/g to 300 m²/g, and even more preferably 200 m²/g to 250 m²/g. Silica having a BET specific surface area within the aforementioned ranges offers the advantage of making the rubber reinforcing property compatible with dispersiveness into the rubber component. For this reason, the silica more preferably has a BET specific surface area within a range of 80 m2/g to 300 m²/g. The commercially-available products "Nipsil AQ" and "Nipsil KQ" produced by Tosoh Silica Corporation and the product "ULTRASIL VN3" produced by Evonik Industries AG may be used as such silica. The silica may be used alone or in combination of two or more kinds thereof.

In addition to the above-described silica, the filler (C) can include carbon black, aluminum hydroxide, clay, alumina, talc, mica, kaolin, glass balloon, glass beads, calcium carbonate, magnesium carbonate, magnesium hydroxide, magnesium oxide, titanium oxide, potassium titanate, barium sulfate, and the like as appropriate.

### -Silane coupling agent

The rubber composition can further include a silane coupling agent for further improvement of the effect of reducing the rolling resistance with the compounded silica.

Specific examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. Among these, bis(3-triethoxysilylpropyl)polysulfide and 3-trimethoxysilylpropylbenzothiazyl tetrasulfide are suitable for achieving the effect of improving the reinforcing property.

Of the aforementioned silane coupling agents, one kind may be used alone, or two or more kinds may be used in combination.

In the rubber composition of this disclosure, the compounding amount of the silane coupling agent varies by factors such as the type of silane coupling agent but is preferably selected to fall within a range of 2 mass% to 25 mass% relative to the amount of silica. If the amount is less than 2 mass%, the silane coupling agent is less likely to fully achieve the effect thereof, whereas an amount exceeding 25 mass% may cause gelation of the rubber component. To achieve the effect as a coupling agent and to prevent gelation, the compounding amount of the silane coupling agent is more preferably within the range of 2 mass% to 20 mass%, even more preferably within the range of 5 mass% to 18 mass%, and particularly preferably within the range of 5 mass% to 15 mass%.

### -Softener (D)

The rubber composition may further contain a softener (D). Here, examples of the softener (D) include a petroleum softener such as an aroma oil, a paraffin oil, or a naphthene oil; and a plant-based softener such as a palm oil, a castor oil, a cottonseed oil, or a soybean oil. When compounding the softener (D), the softener (D) is preferably in a liquid state at a room temperature of approximately 25°C in view of ease of handling. Among the above-listed softeners, for example, a petroleum softener such as an aroma oil, a paraffin oil, or a naphthene oil is preferably compounded, and preferably no plant-based softener is compounded. When compounding the softener (D), the rubber composition is preferably prepared by compounding 10 parts by mass or less of the softener (D), more preferably 5 parts by mass or less, per 100 parts by mass of the rubber component (A). Setting the compounding amount of the softener (D) to 10 parts by mass or less per 100 parts by mass of the rubber component (A) can enhance the effect of improving braking performance on a wet road surface, such as a manhole, that is slipperier than an asphalt road surface. To improve the wet performance, however, it is particularly preferable not to compound the softener (D) in the rubber composition of this disclosure.

### -Other components

In addition to the rubber component (A), the thermoplastic resin (B), the filler (C), and the softener (D), the rubber composition of this disclosure can be compounded with other compounding agents typically used in the rubber industry. For example, an antioxidant, a vulcanization accelerator, a vulcanization accelerator aid, a vulcanizing agent, and the like may be appropriately selected in a range that does not impede the object of this disclosure and compounded in an amount within a typical range. Commercially-available agents may suitably be used as the compounding agents. The rubber composition of this disclosure can be manufactured by compounding the rubber component (A) including NR with the thermoplastic resin (B), the filler (C), the softener (D) appropriately selected as necessary, and/or various compounding agents, and by subjecting the resulting compound to processes such as kneading, warming, and extrusion.

A known method can be used as the method for using the rubber composition in the tread rubber.

For example, the above-described rubber composition can be used as the tread rubber to form a raw tire, and the raw tire can be vulcanized with a typical method to manufacture a tire.

The 50% modulus of the tread rubber is preferably 1.0 MPa or lower.

The reason is that setting the 50% modulus of the tread rubber within the aforementioned range can achieve a better reduction in the rolling resistance as a result of the below-described synergistic effect with the bead filler (the rolling resistance is low both at low temperatures and at high temperatures, and the difference in rolling resistance between low temperatures and high temperatures is small).

### (Bead filler)

The dynamic storage modulus (E'), measured at 1% strain, of the bead filler in the tire of this disclosure is 50 MPa or lower.

Conventionally, when the flexibility of the tread is increased to improve the wet performance, a resulting deterioration in steering stability has been feared. With this disclosure, however, the dynamic storage modulus (E') of the bead filler is set low, thereby increasing the flexibility of the tire. As a result, the rolling resistance can be reduced both at low temperatures and at high temperatures, and the difference in rolling resistance between low temperatures and high temperatures can be reduced.

From the same perspective, the dynamic storage modulus (E') of the bead filler measured at 1% strain is preferably 30 MPa or lower and more preferably 20 MPa or lower. Furthermore, the lower limit on the 50% modulus of the bead filler is preferably approximately 2.0 MPa, because steering stability might deteriorate if the 50% modulus is too low.

In this disclosure, the dynamic storage modulus (E') is measured at a measurement temperature of 25°C and 1% strain.

As long as the dynamic storage modulus (E') measured at 1% strain can be 50 MPa or lower, the formulation of the rubber composition that constitutes the bead filler is not limited, and a known formulation may be used.

For example, the bead filler can be manufactured using a rubber composition made of natural rubber, carbon black, silica, sulfur, a vulcanization accelerator, and the like.

The carbon black and the silica are compounded as fillers. The total compounding amount of the fillers is preferably 20 parts by mass to 130 parts by mass per 100 parts by mass of the rubber component. To achieve the dynamic storage modulus (E') of the bead filler of this disclosure, the compounding amount of the carbon black is preferably 70 parts by mass or less, and more preferably 60 parts by mass or more, per 100 parts by mass of the rubber component.

Furthermore, to achieve the dynamic storage modulus (E') of the bead filler of this disclosure, a thermoplastic resin is preferably compounded. The compounding amount of the thermoplastic resin is preferably 0.1 parts by mass to 10 parts by mass, and more preferably 1 part by mass to 5 parts by mass, per 100 parts by mass of the rubber component. Setting the compounding amount of the thermoplastic resin within the above ranges improves the adhesiveness with respect to other material.

The compounding amount of the sulfur is preferably 1 part by mass to 15 parts by mass, and more preferably 5 parts by mass to 10 parts by mass, per 100 parts by mass of the rubber component.

The ratio of the 50% modulus of the tread rubber to the dynamic storage modulus (E') of the bead filler measured at 1% strain (50% modulus of tread rubber/E') is preferably 0.02 to 0.1 and more preferably 0.05 to 0.1.

The reason is that setting the 50% modulus of the bead filler with respect to the 50% modulus of the tread rubber within the above ranges achieves an even better effect of reducing the rolling resistance.

### EXAMPLES

This disclosure is described in more detail below with reference to Examples, by which this disclosure is not intended to be limited in any way.

### (Samples 1 to 22)

Rubber compositions were prepared according to the formulations shown in Table 1. The rubber compositions thus prepared were each used as tread rubber to produce, with a typical method, a radial tire of size 195/65R15 for a passenger vehicle (Samples 1 to 17).

The bead filler was manufactured with a rubber composition having a formulation constituted by natural rubber, carbon black, sulfur, and a vulcanization accelerator.

The 50% modulus of the tread rubber in the produced radial tire for passenger vehicles was measured by cutting out a sheet with a rubber thickness of 0.3 mm, preparing a test sample by cutting with a DINS3A-type blade, and pulling the sample under the condition of a pulling speed of 100 mm/min. Table 1 lists the measurement results.

The dynamic storage modulus (E') of the bead filler measured at 1% strain in the produced radial tire for passenger vehicles was measured by cutting out the bead filler from the tire, preparing a 2 mm thick by 5 mm wide by 40 mm long sheet, and measuring the sheet at a measuring temperature of 25°C, an initial load of 160 mg, and a dynamic strain of 1% using a spectrometer manufactured by Ueshima Seisakusho Co., Ltd. Table 1 lists the measurement results.

### (Evaluation)

The following evaluations were then performed on the produced sample tires.

### (1) Temperature difference of rolling resistance

The sample tires were mounted on a test car, and the fuel efficiency was measured by an actual vehicle test in an environment of 25°C to 30°C (normal temperature) and 5°C to 10°C (low temperature). The difference in fuel efficiency between the normal temperature and a low temperature was calculated as an index (i.e. the change in fuel efficiency at the normal temperature was calculated as an index indicating the percent ratio, with the fuel efficiency at low temperature being 100).

The indexed difference in fuel efficiency was then listed as an index, with the value for the sample tire of Comparative Example 1 being 100. Table 1 lists these index values as the "evaluation index of rolling resistance". As the evaluation index of rolling resistance is lower, the difference between the fuel efficiency at the low temperature and the fuel efficiency at the normal temperature is smaller, and tire performance is better.

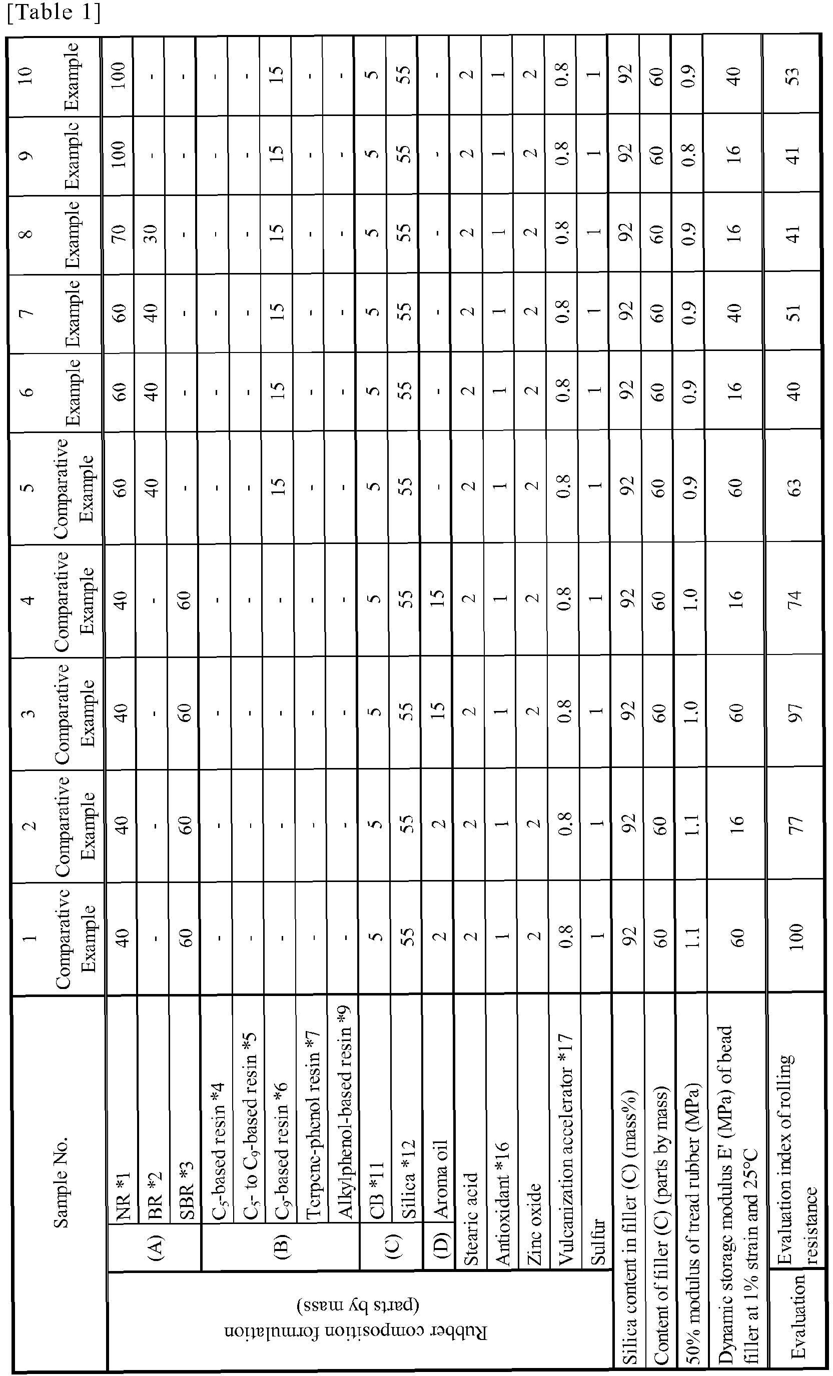

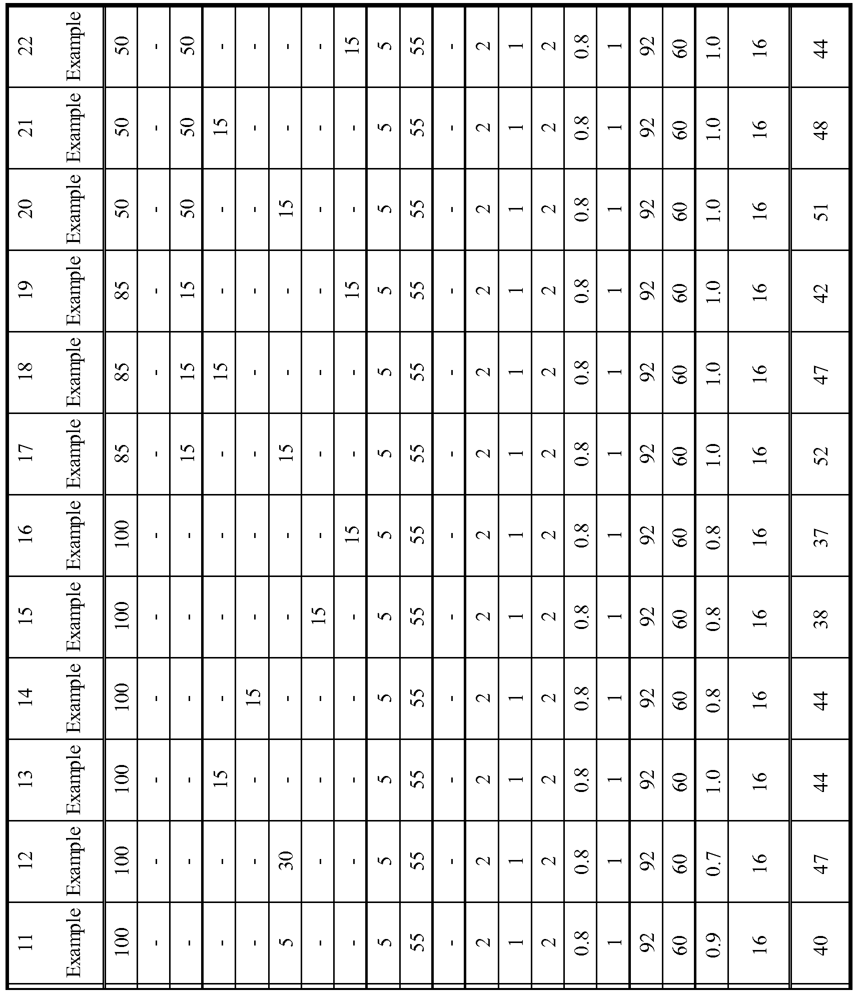

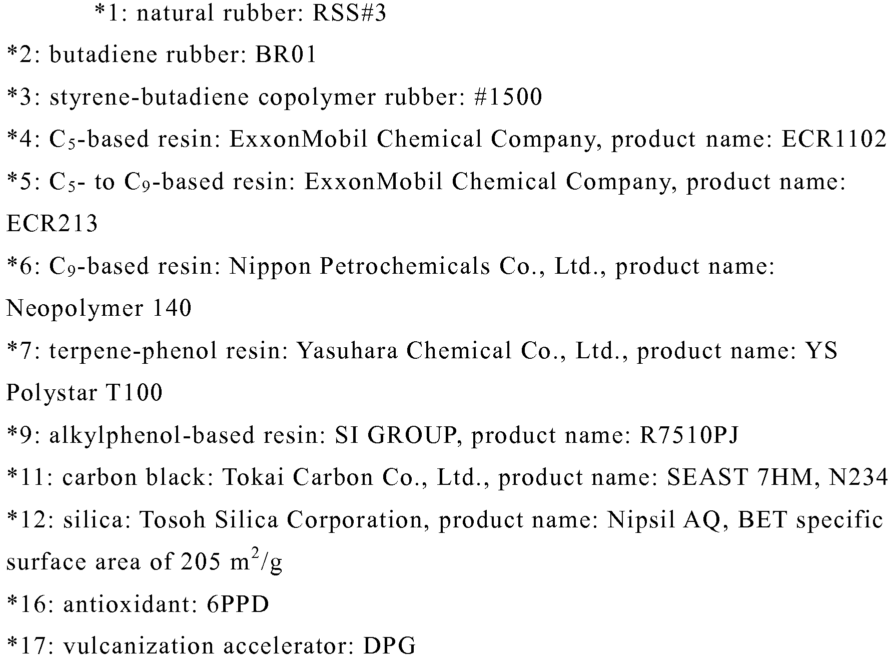

The results in Table 1 show a good, small temperature difference in the rolling resistance for each of the samples according to the Examples as compared to the samples according to the Comparative Examples. The rolling resistance was also small at a high temperature and at a low temperature for the samples according to the Examples.

### INDUSTRIAL APPLICABILITY

According to this disclosure, a tire in which the rolling resistance is reduced at both low temperatures and at high temperatures and in which the rolling resistance exhibits a small difference between low temperatures and high temperatures can be provided.

### REFERENCE SIGNS LIST

- 1: Bead portion
- 2: Sidewall portion
- 3: Tread portion
- 4: Carcass
- 5: Belt layer
- 6: Bead core
- 7: Bead filler

## Claims

1. A tire comprising:
a tread portion; and
a pair of bead portions comprising a bead core and a bead filler disposed on a radial outside of the bead core, wherein
tread rubber forming the tread portion comprises a rubber composition including a rubber component (A) including 50 mass% or more of natural rubber, at least one kind of thermoplastic resin (B) selected from the group consisting of Cs-based resins, C₅- to C₉-based resins, C₉-based resins, terpene-based resins, terpene-aromatic compound-based resins, rosin-based resins, dicyclopentadiene resins, and alkylphenol-based resins, 5 parts by mass to 50 parts by mass per 100 parts by mass of the rubber component (A) of the at least one kind of thermoplastic resin (B) being included, and a filler (C) including silica, 20 parts by mass to 120 parts by mass per 100 parts by mass of the rubber component (A) of the filler (C) being included, and
a dynamic storage modulus (E') of the bead filler measured at 1% strain at 25°C is 50 MPa or lower.

2. The tire of claim 1, wherein a content of the silica in the filler (C) is 50 mass% to 100 mass%.

3. The tire of claim 2, wherein a content of the silica in the filler (C) is 90 mass% or higher.

4. The tire of any one of claims 1 to 3, wherein 10 mass% to 50 mass% of styrene-butadiene copolymer rubber is included in the rubber component (A).

5. The tire of any one of claims 1 to 4, wherein a 50% modulus of the tread rubber is 1.0 MPa or lower.

6. The tire of claim 5, wherein a ratio of the 50% modulus of the tread rubber to the dynamic storage modulus (E') of the bead filler is 0.02 to 0.1.

## Patentansprüche

1. Reifen umfassend:
einen Profilteil; und
ein Paar Wulstteile umfassend einen Wulstkern und einen Wulstfüllstoff, der auf einer radialen Außenseite des Wulstkerns angeordnet ist, wobei
der Profilkautschuk, der den Profilteil bildet, eine Kautschukzusammensetzung umfasst, die eine Kautschukkomponente (A), die 50 Masse-% oder mehr Naturkautschuk, mindestens eine Art thermoplastisches Harz (B) ausgewählt aus der Gruppe bestehend aus Harzen auf C₅-Basis, Harzen auf C₅- bis C₉-Basis, Harzen auf C₉-Basis, Harzen auf Terpenbasis, Harzen auf der Basis aromatischer Terpenverbindung, Harzen auf Kolophoniumbasis, Dicylopentadienharzen und Harzen auf Alkylphenolbasis, wobei 5 Masseteile bis 50 Masseteile pro 100 Masseteile der Kautschukkomponente (A) der mindestens einen Art von thermoplastischem Harz (B) integriert sind und einen Füllstoff (C), der Siliciumdioxid umfasst, umfasst, wobei 20 Masseteile bis 120 Masseteile pro 100 Masseteile der Kautschukkomponente (A) des Füllstoffs (C) integriert sind und
ein dynamischer Speichermodul (E') des Wulstfüllstoffs, unter einer Belastung von 1 % bei 25 °C gemessen, 50 MPa oder weniger beträgt.

2. Reifen nach Anspruch 1, wobei ein Gehalt des Siliciumdioxids in dem Füllstoff (C) 50 Masse-% bis 100 Masse-% beträgt.

3. Reifen nach Anspruch 2, wobei ein Gehalt des Siliciumdioxids in dem Füllstoff (C) 90 Masse-% oder mehr beträgt.

4. Reifen nach irgendeinem der Ansprüche 1 bis 3, wobei 10 Masse-% bis 50 Masse-% Styrol-Butadien-Copolymerkautschuk in die Kautschukkomponente (A) integriert sind.

5. Reifen nach irgendeinem der Ansprüche 1 bis 4, wobei ein Modul des Profilkautschuks von 50 % 1,0 MPA oder weniger beträgt.

6. Reifen nach Anspruch 5, wobei ein Verhältnis des Moduls des Profilkautschuks von 50 % zum dynamischen Speichermodule (E') des Profilfüllstoffs 0,02 bis 0,1 beträgt.

## Revendications

1. Pneumatique comprenant:
une partie bande de roulement; et
une paire de parties talons comprenant une tringle de talon et un élément de remplissage de talon disposé sur un extérieur radial de la tringle de talon,
le caoutchouc de talon formant la partie bande de roulement comprenant une composition de caoutchouc comprenant un composant caoutchouc (A) comprenant 50 % en masse ou plus de caoutchouc naturel, au moins un type de résine thermoplastique (B) sélectionné dans le groupe constitué des résines en C₅, des résines en C₅ à C₉, des résines en C₉, des résines terpéniques, des résines à base de terpène-composé aromatique, des résines à base de colophane, des résines dicyclopentadiènes, et des résines à base d'alkylphénol, 5 parties en masse à 50 parties en masse pour 100 parties en masse du composant caoutchouc (A) du au moins un type de résine thermoplastique (B) étant inclus, et une charge (C) comprenant de la silice, 20 parties en masse à 120 parties en masse pour 100 parties en masse du composant caoutchouc (A) de la charge (C) étant inclus, et
un module de stockage dynamique (E') de l'élément de remplissage de talon mesuré sous une contrainte de 1 % à 25°C étant de 50 MPa ou moins.

2. Pneumatique selon la revendication 1, une teneur de la silice dans la charge (C) étant de 50 % en masse à 100 % en masse.

3. Pneumatique selon la revendication 2, une teneur de la silice dans la charge (C) étant de 90 % en masse ou plus.

4. Pneumatique selon l'une quelconque des revendications 1 à 3, 10 % en masse à 50 % en masse du caoutchouc copolymère de styrène-butadiène étant inclus dans le composant caoutchouc (A).

5. Pneumatique selon l'une quelconque des revendications 1 à 4, un module à 50 % du caoutchouc de talon étant de 1,0 MPa ou moins.

6. Pneumatique selon la revendication 5, un rapport du module à 50 % du caoutchouc de talon au module de stockage dynamique (E') de l'élément de remplissage de talon étant de 0,02 à 0,1.
